# EUROPEAN PATENT APPLICATION

(11) **EP 1 536 544 A2**
(43) Date of publication of application: **01.06.2005**
(21) Application number: 04256936.8
(22) Date of filing: 09.11.2004
(51) Int. Cl.: H02K 7/102

(54) **Traction motor with disc brake rotor**

(30) Priority: 26.11.2003 US 525510 P
(71) Applicant: ArvinMeritor Technology, LLC, Troy, MI 48084 (US)
(72) Inventor: Kramer, Dennis, Troy Michigan 48098 (US)
(74) Representative: Jones, John Bryn

(57) **Abstract**

A drive motor includes a stator and a motor rotor. The motor rotor is mounted for rotation relative to the stator. The stator includes a first plurality of poles with each pole being surrounded by a coil. The motor rotor includes a second plurality of poles. Current is switched between the coils to bring poles from the second plurality of poles into alignment with corresponding poles from the first plurality of poles to rotate the motor rotor and generate an output torque to drive a vehicle component. A brake rotor is formed on an end face of the motor rotor. Brake pads are selectively brought into frictional contact with the brake rotor to generate a braking force for the vehicle component.

## Description

### RELATED APPLICATION

The application claims priority to U.S. Provisional Application No. 60/525,510, filed on November 26, 2003.

### TECHNICAL FIELD

This invention generally relates to a drive motor with integral braking for a vehicle component.

### BACKGROUND OF THE INVENTION

Various types of drive motors can be used to operate vehicle components. Alternating current (AC) motors and brush direct current (DC) motors are often used for these applications. Conventional AC and brush DC motors include a rotor and a stator. The rotor is a rotating center member and the stator is a non-rotating member that surrounds the rotor. Current is supplied to coils in the stator, which generates a magnetic field causing the rotor to rotate and generate drive torque.

Traditionally, AC and brush DC motors require separate external braking components due to the complexity of electro-magnetic stator and rotor components. This increases cost and assembly time. Further, more packaging space is required for the external braking components. Depending on where the drive motor is located, e.g. vehicle wheel, driveline, axle, etc., this additional packaging space is not always available.

For the above reasons, it would be desirable provide a drive motor for a vehicle component that includes integral braking. The drive motor should be compact and easily adaptable to drive various vehicle components in addition to overcoming other deficiencies in the prior art as outlined above.

### SUMMARY OF THE INVENTION

A drive motor includes a stator and a motor rotor mounted for rotation relative to the stator to generate an output torque for driving a vehicle component. A brake rotor is formed on the motor rotor. At least one brake pad is selectively moved into engagement with the brake rotor to generate a braking force for the vehicle component.

The stator includes a first plurality of poles with each pole being surrounded by a coil. The motor rotor includes a second plurality of poles. Current is switched between the coils to bring poles from the second plurality of poles into alignment with corresponding poles from the first plurality of poles to rotate the motor rotor and generate an output torque to drive the vehicle component.

In one example, the stator is formed as a cylindrical member defining a central cavity. The motor rotor is positioned within the central cavity. The first plurality of poles is formed about an inner circumferential surface of the central cavity and the second plurality of poles is formed about an external circumferential surface of the motor rotor. In another example, the positions of the motor rotor and stator are reversed. The motor rotor is formed as a cylindrical member defining a central cavity and the stator is positioned within the central cavity.

The brake rotor is preferably formed on at least one end face of the motor rotor. When the motor rotor is formed as a cylindrical member, the brake rotor is generally formed as a ring-shaped member. When the motor rotor is positioned within a stator that is formed as a cylindrical member, the brake rotor is generally formed as a disc.

The subject invention provides integral braking on a drive motor for a vehicle component and eliminates the need for separate external braking components. These and other features of the present invention can be best understood from the following specification and drawings, the following of which is a brief description.

### BRIEF DESCRIPTION OF THE DRAWINGS

Figure 1 is a schematic diagram of a vehicle component driven by a drive motor incorporating the subject invention.
Figure 2 is a schematic view of one example of a drive motor incorporating the subject invention.
Figure 3 is a schematic view of another example of a drive motor incorporating the subject invention.
Figure 4 is a schematic view of another example of a drive motor incorporating the subject invention.
Figure 5 is a schematic view of another example application for a drive motor incorporating the subject invention.

### DETAILED DESCRIPTION OF THE PREFERRED EMBODIMENT

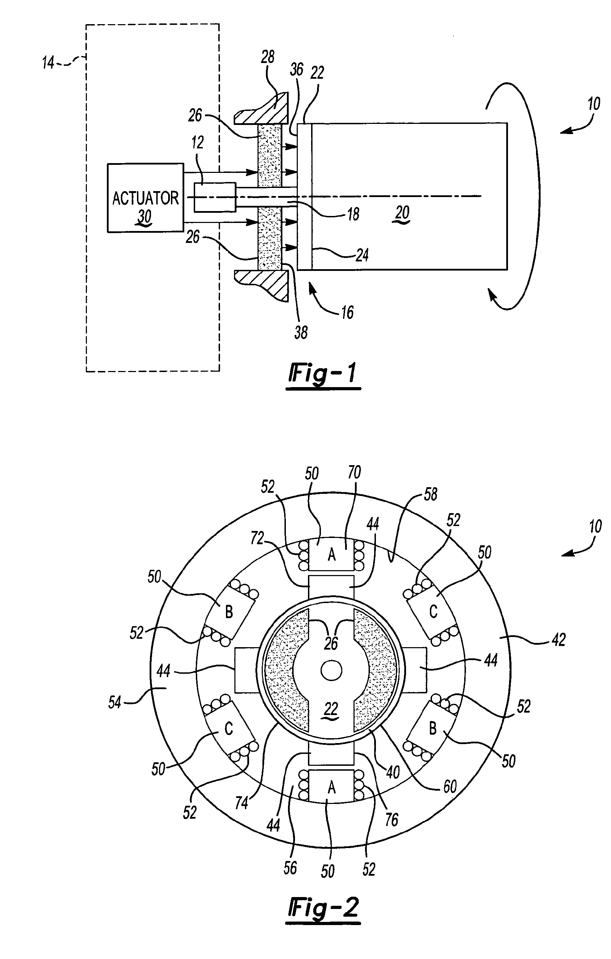

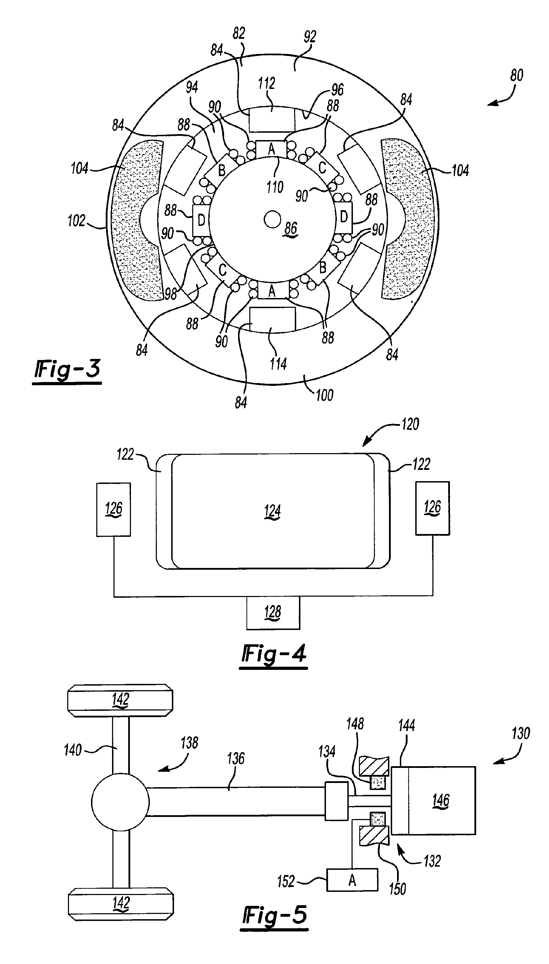

A drive motor assembly 10 for driving a vehicle component 12 is shown in Figure 1. The drive motor assembly 10 can be used to drive any type of rotating component on a vehicle such as a wheel, driveline, or axle, for example. In one example, the drive motor assembly 10 is used to drive a vehicle wheel 14, shown in phantom. The drive motor assembly 10 includes an integral braking mechanism 16. In a wheel application, the integral braking mechanism 16 can be used for parking braking, primary braking, or for supplementary primary braking. In a driveline application, the braking mechanism 16 can provide a driveline park brake function (see Figure 5).

As shown in Figure 1, the drive motor assembly 10 includes a rotating output shaft 18 that is operably coupled to drive the vehicle component 12. The drive motor assembly 10 includes a rotating motor component 20 that has a brake rotor 22 integrally formed on one end face 24. At least one brake pad 26 is mounted to a non-rotating vehicle structure 28. Figures 1, 2, and 3 show two (2) brake pads 26. An actuator 30, shown schematically, and which is responsive to either a mechanical or electrical input command, selectively moves the brake pads 26 into engagement with the brake rotor 22 to generate a braking force. Thus, braking is provided directly by the drive motor assembly 10 without the need for a separate external braking system.

The actuator 30 can be any type of actuator known in the art. The actuator 30 should include at least one axially movable element that will move the brake pads 26 into engagement with the brake rotor 22 as indicated by the arrows in Figure 1.

One example of the drive motor assembly 10 is shown in Figure 2. In this embodiment, the drive motor assembly 10 includes a motor rotor 40 that rotates relative to a stator 42. The motor rotor 40 includes a first plurality of magnetic poles 44. Anywhere from three (3) to eighteen (18) poles can be formed on the motor rotor 40. Figure 2 shows a four (4) pole configuration. Preferably, six (6) to eighteen (18) poles are used, however other configurations known in the art could also be used.

Preferably, the drive motor assembly 10 is a brushless DC variable reluctance motor of conventional electromagnetic design where the magnetic poles 44 of the motor rotor 40 are formed from a material common with the brake rotor 22. In a multi-pole variable reluctance motor, the magnetic poles 44 are formed on the motor rotor 40 itself. Preferably, the motor rotor 40 and the stator 42 are formed from a laminate including laminated iron with the magnetic poles being formed as part of the laminate. The laminate includes a plurality of layers that are stacked together as known. Each layer has a predetermined thickness.

The brake rotor 22 can be integrally formed on the end face 24 as part of the same laminate. The layers can be the same thickness as the motor rotor layers or can have a greater layer thickness. Optionally, the brake rotor 22 can be formed from a different material that is attached to the end face 24. Any known braking material could be used.

In either configuration, the brake rotor 22 defines a generally planar end face 36 that engages an end face 38 of the brake pads 26. The actuator 30 moves the brake pads 26 into contact with the brake rotor 22 such that the respective end faces 36, 38 engage each other.

The drive motor assembly 10 also includes the stator 42 that is fixed to a non-rotating vehicle structure 28. The stator 42 includes a plurality of corresponding magnetic poles 50. Coils or windings 52 are mounted to the stator 42 to surround each of the magnetic poles 50.

In the embodiment of Figure 2, the stator 42 is formed as a cylindrical member 54 defining an inner central cavity 56. The magnetic poles 50 of the stator 42 and the coils 52 are mounted on an inner circumferential surface 58 of the inner central cavity 56.

The motor rotor 40 is mounted within the inner central cavity 56 of the stator 42. In the embodiment shown in Figure 2, the magnetic poles 44 are formed on an external circumferential surface 60 of the motor rotor 40. The brake rotor 22 is formed on the end face 24 of the motor rotor 40. The brake pads 26 are moved into frictional engagement with this end face 24 to generate the braking torque.

The magnetic poles 50 of the stator 42 preferably alternate between three-phases A, B, C. As current is switched between the coils 52, a magnetic field is generated that proceeds around the stator 42, bringing the out-of-phase magnetic poles 44 of the motor rotor 40 into alignment with corresponding magnetic poles 50 of the stator 42. This alignment process generates rotation of the motor rotor 40 and generates output torque to drive the vehicle component 12. As shown in an example in Figure 2, a magnetic path goes from an A phase stator pole 70 to a first corresponding rotor pole 72, through a core 74 of the motor rotor 40, and to a corresponding rotor pole 76 at an A phase stator pole 78 that is one hundred and eighty (180) degrees opposite the first corresponding rotor pole 72.

Another disclosed embodiment of a drive motor assembly 80 with integral braking is shown in Figure 3. This embodiment is similar to the embodiment shown in Figure 2 but the positions of the motor rotor 40 and stator 42 are reversed. The drive motor assembly 80 of Figure 3 includes a rotating motor rotor 82 with a first plurality of magnetic poles 84. The drive motor assembly 80 also includes a non-rotating stator 86 that has a plurality of corresponding magnetic poles 88. Coils or windings 90 are mounted to the stator 86 to surround each of the magnetic poles 88 of the stator 86. In the example of Figure 3, six (6) magnetic poles 84 are shown for the motor rotor 82 and eight (8) magnetic poles 88 are shown for the stator 86.

In the embodiment of Figure 3, the rotating motor rotor 82 is formed as a cylindrical member 92 defining an inner central cavity 94. The magnetic poles 84 of the motor rotor 82 are formed on an inner circumferential surface 96 of the central cavity 94. The non-rotating stator 86 is mounted within the central cavity 94 of the motor rotor 82. The magnetic poles 88 and coils 90 of the stator 86 are mounted or formed on an external circumferential surface 98 of the stator 86. A brake rotor 100 is formed on an end face 102 of the motor rotor 82. In this configuration the brake rotor 100 has a generally ring-shaped appearance. Brake pads 104 are moved into frictional engagement with end face 102 to generate the braking force.

The magnetic poles 88 of the stator 86 in this configuration alternate between four-phases A, B, C, D. As current is switched between the coils 90, a magnetic field is generated that proceeds around the stator 86 bringing out of phase magnetic poles 84 of the motor rotor 82 into alignment with the corresponding poles 88 of the stator 86. This alignment process generates rotation of the motor rotor 82 and generates output torque to drive the vehicle component 12. As shown in Figure 3, a magnetic path is from an A phase stator pole 110 to a first corresponding rotor pole 112, and around the motor rotor 82 to a corresponding rotor pole phase 114 that is one hundred and eighty (180) degrees opposite the first corresponding rotor pole 112.

The configuration of Figure 3 is preferable for applications where more brake torque and better brake rotor heat dissipation are required. The configuration of Figure 2 is preferred for a lighter duty and highly efficient braking application.

In either configuration, the brake rotor 22, 100 can be formed on only one end face of the motor rotor 40, 82, or can be formed on both end faces of the motor rotor 40, 82. Figure 4 shows an example of a drive motor assembly 120 including a brake rotor 122 formed on both end faces of a motor rotor 124. Brake pads 126 are positioned adjacent to each brake rotor 122. If both end faces of the motor rotor 124 are formed with the brake rotor 122 then brake pad to brake rotor alignment can be realized with either a sliding rotor, i.e. a sliding armature/rotor, or a sliding caliper indicated schematically at 128. This would allow an application of equal brake pressure to the two end faces of the motor rotor 124.

Another example of a vehicle application using a drive motor assembly 130 incorporating the subject invention is shown in Figure 5. In this application, the drive motor assembly 130 includes an integral braking mechanism 132 that provides a driveline park brake function. The drive motor assembly 130 includes an output shaft 134 coupled to an input shaft 136 for a drive axle 138. The drive axle 138 includes an axle housing 140 extending between a pair of laterally spaced wheels 142.

The braking mechanism 132 includes a brake rotor 144 formed on a rotating component 146 of the drive motor assembly 130. Brake pads 148 are mounted to a non-rotating structure 150. An actuator 152 provides a mechanical or electrical input signal to move the brake pads 148 into engagement with the brake rotor 144 to achieve a park condition.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A drive motor including braking for a vehicle component comprising:
a stator;
a motor rotor mounted for rotation relative to said stator to drive a vehicle component; and
a brake rotor formed as part of said motor rotor to provide braking for the vehicle component.

2. The drive motor according to claim 1 wherein said stator has a cylindrical member defining an inner central cavity with said motor rotor being positioned within said inner central cavity.

3. The drive motor according to claim 2 wherein said stator includes a first plurality of magnetic poles formed about an inner circumferential surface of said inner central cavity with each of said first plurality of magnetic poles being surrounded by a coil and wherein said motor rotor includes a second plurality of magnetic poles formed about an external circumferential surface of said motor rotor such that an applied current switches between said coils to bring poles from said second plurality of poles into alignment with corresponding poles from said first plurality of poles to rotate said motor rotor and generate an output torque to drive the vehicle component.

4. The drive motor according to claim 1 wherein said motor rotor has a cylindrical member defining an inner central cavity with said stator being positioned within said inner central cavity.

5. The drive motor according to claim 4 wherein said stator includes a first plurality of magnetic poles formed about an external circumferential surface of said stator with each of said first plurality of magnetic poles being surrounded by a coil and wherein said motor rotor includes a second plurality of magnetic poles formed about an inner circumferential surface of said inner central cavity such that an applied current switches between said coils to bring poles from said second plurality of poles into alignment with corresponding poles from said first plurality of poles to rotate said motor rotor and generate an output torque to drive the vehicle component.

6. The drive motor according to any preceding claim including at least one brake pad mountable to a non-rotating vehicle structure for selective engagement with said brake rotor, and an actuator responsive to an input command to bring said at least one brake pad into frictional engagement with said brake rotor to generate a braking force wherein said brake rotor is formed on at least one end face of said motor rotor.

7. The drive motor according to any preceding claim wherein the vehicle component comprises a vehicle wheel and/or said motor rotor and said brake rotor are formed from a common material which common material preferably comprises laminated iron.

8. A drive motor including braking for a vehicle component comprising:
a first motor component including a first plurality of poles surrounded by coils;
a second motor component mounted for rotation relative to said first motor component and including a second plurality of poles wherein current is switched between said coils to bring poles from said second plurality of poles into alignment with corresponding poles from said first plurality of poles to rotate said second motor component and generate an output torque to drive a vehicle component;
a brake rotor formed as part of said second motor component;
a plurality of brake pads mountable to a non-rotating vehicle structure for selective engagement with said brake rotor; and
an actuator responsive to an input command to bring said plurality of brake pads into frictional engagement with said brake rotor to generate a braking force.

9. The drive motor according to claim 8 wherein said first motor component comprises a stator and said second motor component comprises a motor rotor.

10. The drive motor according to claim 9 wherein said stator is mountable to a non-rotating vehicle structure.

11. The drive motor according to claim 12 wherein said stator comprises a cylindrical member defining a central cavity and in which said motor rotor is mounted within said central cavity or wherein said motor rotor comprises a cylindrical member defining a central cavity and in which said stator is mounted within said central cavity or wherein said brake rotor is formed on at least one end face of said motor rotor or wherein said brake rotor includes a first rotor portion formed on one end face of said motor rotor and a second rotor portion formed on an opposite end face of said motor rotor.

12. A method of providing braking on a drive motor comprising:
forming a brake rotor on a rotating motor component to provide braking for a vehicle component.

13. The method according to claim 12 including forming the brake rotor on at least one end face of the rotating motor component.

14. The method according to claim 12 or 13 including mounting a brake pad on a non-rotating structure and selectively bringing the brake pad into frictional contact with the brake rotor to generate a braking force to brake the vehicle component.

15. The method according to any one of claims 12 to 14 including forming the brake rotor and the rotating motor component from a common material.
